Europäisches Patentamt

European Patent Office

Office européen des brevets

(11) Publication number: **0 042 521**
**B1**

# EUROPEAN PATENT SPECIFICATION

(45) Date of publication of patent specification: 05.10.83

(51) Int. Cl.³: **H 01 S 3/30**

(21) Application number: 81104346.2

(22) Date of filing: 05.06.81

(54) Method and apparatus for laser pulse compression.

(30) Priority: 23.06.80 US 162342

(43) Date of publication of application:
30.12.81 Bulletin 81/52

(45) Publication of the grant of the patent:
05.10.83 Bulletin 83/40

(84) Designated Contracting States:
DE FR GB IT NL SE

(73) Proprietor: Hughes Aircraft Company
Centinela Avenue and Teale Street
Culver City, California 90009 (US)

(72) Inventor: Hon, David T.
2522 Banyan Drive
Los Angeles California (US)

(74) Representative: Patentanwälte Kohler -
Schwindling - Späth
Hohentwielstrasse 41
D-7000 Stuttgart 1 (DE)

(56) References cited:
IEEE JOURNAL OF QUANTUM ELECTRONICS,
vol. QE—15, May 1979,
New York, USA
J.R. MURRAY et al. "Raman pulse compression
of excimer lasers for application to laser fusion"
pages 342—368

IEEE JOURNAL OF QUANTUM ELECTRONICS,
vol. QE—15, no. 5, May 1979,
New York, USA
J.J. EWING et al. "Optical pulse compression
systems for laser fusion" pages 368—379

(56) References cited:
OPTICS LETTERS, vol. 5, no. 12, December 1980,
New York, USA
David THON: "Pulse compression by stimulated
Brillouin scattering" pages 516—518

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

## Method and apparatus for laser pulse compression

The present invention related generally to laser devices, and more particularly, to devices which narrow the pulsewidth of applied laser pulses.

BACKGROUND OF THE INVENTION

Laser are currently used in a wide variety of applications including medical, welding, cutting, laser isotope separation, laser fusion, laser rangefinding, and nonlinear frequency conversions. Each of these applications utilize lasers which have particular temporal pulsewidths which are well suited to the particular application.

Each laser has a range of temporal pulsewidths in which it may operate. For instance, Q-switched YAG lasers typically operate in the 10—300 nonosecond pulsewidth range. $CO_2$ lasers may operate in the 50—300 nanosecond range. A flashlamp-pumped dye laser may operate in the .5—2 microsecond range. The potentials of these important lasers, however, are not fully utilized in such important applications as laser rangefinding and laser fusion, or the like, because these applications are operated most efficiently with lasers providing temporal pulsewidths on the order of 1—2 nanoseconds or less.

There are several known ways of obtaining shortened pulses from laser sources. The most common way is by means of Q-switching. Q-switching involves degrading the quality factor Q of an optical resonator during pumping so that the gain may build up to a high value without exceeding the oscillation threshold value. Once inversion reaches its peak, the Q value is restored to its original value. Consequently, the stored energy of excited atoms undergoing inversion is transferred to oscillating photons, which are reflected in the resonator cavity and subsequently escape to form an output pulse. This pulse, commonly known as a giant pulse, is usually short, on the order of $10^{-8}$ seconds, or so. Another way of obtaining shortened pulses is by means of mode-locking which utilizes an optical switching mechanism located within a CW laser resonating cavity. The operation of the switch controls the Q-factor of the resonator and provides a train of short pulses as the output. These techniques are discussed in a text entitled "Quantum Electronics", 2nd Ed., by A. Yariv, chapter 11, John Wiley & Sons, 1975.

Pulse compression by means of stimulated Raman scattering is also known in the art. This concept is discussed in a paper entitled "Raman Compression Theory" by D. Eimerl et al, published in the Laser Program Annual Report, section 7.6.3, 1977, published by Lawrence Livermore Laboratory of the University of California. However, no apparatus by which to obtain pulse shortening is described in this paper. The Eimerl paper is a theoretical discussion of Raman compression theory which provides for a general understanding of the subject. A discussion of the physical and optical processes involved in Raman compression is undertaken along with a mathematical analysis and modeling. The principles of an apparatus for Raman pulse compression are disclosed in IEEE Journal of Quantum Electronics, vol QE—15, no. 5, May 1979, pages 342—379. Nothing is disclosed or suggested regarding apparatus for inducing and obtaining spontaneous stimulated back-scattering.

Thus, it would be an important step forward in the art to have a device which would allow such important lasers as YAG, $CO_2$ and dye lasers or the like, to be utilized efficiently at shorter temporal pulsewidths.

SUMMARY OF THE INVENTION

It is, therefore, an object of the present invention to provide apparatus which transforms an applied laser pulse into a laser pulse having a shortened pulsewidth and higher peak power.

The invention comprises a source of laser pulses, and nonlinear means disposed to receive the laser pulses. The nonlinear means is capable of undergoing stimulated backscattering and thus reflecting backscattered light. For example, stimulated backscattering processes such as Brillouin, Raman, or Rayleigh scattering may be employed. The nonlinear means includes means for increasing the energy density of the leading portion of an applied laser pulse at a predetermined location in the nonlinear means to a level above the threshold necessary to initiate spontaneous stimulated backscattering in the nonlinear means. The stimulated backscattered light interacts with the remainder of the applied laser pulse within the nonlinear means in a manner which both amplifies and shortens the pulsewidth of the backscattered light.

A method of obtaining a narrow laser pulse derived from a relatively wide laser pulse is also provided by the present invention. The method comprises the steps of generating a laser pulse; propagating the laser pulse in a nonlinear medium; and concentrating the laser pulse at a predetermined position in the medium so as to induce stimulated backscattering therein. The backscattered light produced by the stimulated backscattering interacts with the laser pulse within the medium to produce a relatively narrow laser pulse as compared with the generated laser pulse.

BRIEF DESCRIPTION OF THE DRAWINGS

The invention, including its various objects, features and advantages, may be more readily understood with reference to the following detailed description of several embodiments, taken in conjunction with the accompanying drawings, wherein like reference numerals designate like structural elements, and in which:

FIG. 1 shows a laser system employing the present invention;

FIG. 2 is a four-part illustration of the stimulated Brillouin scattering process, by which pulse compression may be achieved in the present invention;

FIG. 3 shows a second embodiment of nonlinear means for use in the present invention;

FIG. 4 shows representative test data showing pulse compression using the present invention;

FIG. 5 shows a third embodiment of nonlinear means for use in the present invention; and

FIG. 6 is a flow diagram illustrating the method of obtaining a laser pulse having a narrowed pulsewidth utilizing the concepts of the present invention.

DETAILED DESCRIPTION OF THE INVENTION

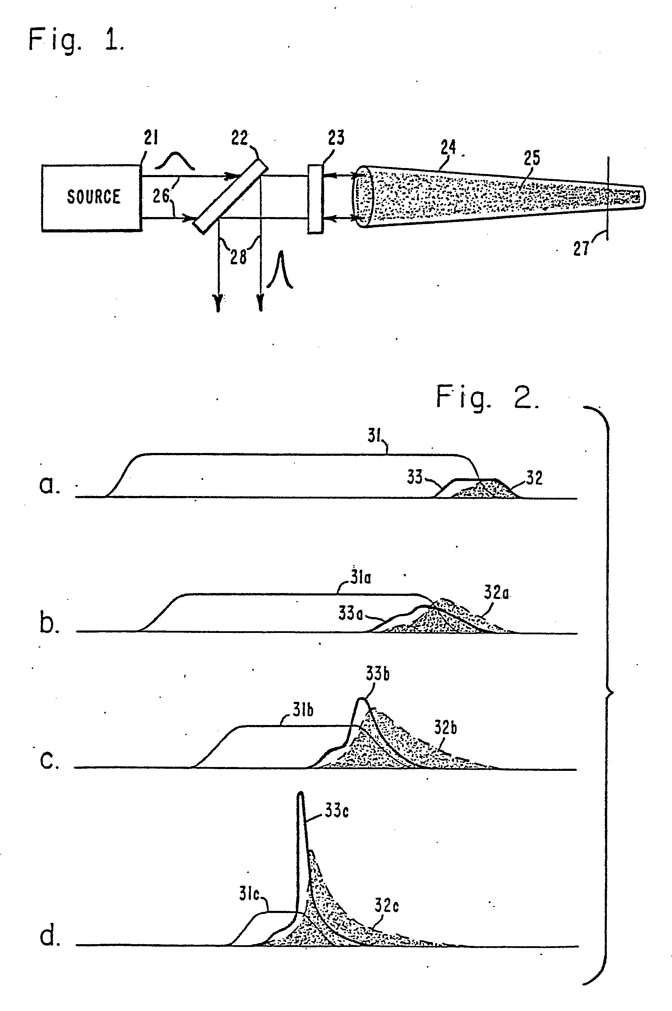

Referring now to FIG. 1, there is shown an embodiment of the present invention which is capable of transforming an applied laser pulse into an amplified laser pulse having a shortened pulsewidth. This concept is generally termed in the art, pulse compression. FIG. 1 shows a laser source 21 which provided a laser pulse represented by arrows 26 along a predetermined optical path. A polarizer 22 is disposed along the optical path as well as a quarter-wave plate 23. Nonlinear means 24 is disposed along the optical path to receive the laser pulse 26 from the laser source 21 after it has passed through the polarizer 22 and quarter-wave plate 23.

The nonlinear means 24 is comprised of a nonlinear material which is capable of undergoing stimulated backscattering, such as Brillouin, Raman or Rayleigh backscattering. For purposes of the description, the nonlinear means 24 will be described with reference to stimulated Brillouin scattering, since it is representative of stimulated backscattering in general, and because reduction to practice of the present invention was made utilizing this process. The nonlinear means 24 includes means, such as a tapered waveguide or lens/waveguide combination, or the like, for increasing the energy density of applied laser light to a level above a threshold necessary to initiate spontaneous stimulated Brillouin scattering within the nonlinear means 24. The nonlinear means 24 should also be comprised of a material which has a third-order nonlinear coefficient and which is optically transparent to the particular wavelength of operation of the laser source 21. As will be more fully described hereinbelow, the nonlinear means 24 may comprise a solid glass tube, a nonlinear gas or liquid in combination with a tapered hollow glass tube, or a nonlinear gas or liquid in combination with a lens and waveguide arrangement.

The nonlinear means 24 may utilize a gas such as $CH_4$ or $SF_6$, a liquid such as water, or a solid such as fuzed quartz or glass. The laser source 21 may be a Q-switched YAG, $CO_2$, excimer or dye laser, or the like. The polarizer 22 and quarter-wave plate 23 are common optical elements, readily available from such manufacturers as Optical Coating Laboratories, Inc. Each laser source 21 is matched to a particular nonlinear means 24 which will yield the most efficient backscattering. It is to be understood, however, that each particular laser source 21 may have numerous nonlinear media in which backscattering may occur, and choice of components are determined by the requirements of the particular application at hand.

The process of stimulated Brillouin scattering is relatively well-understood, and there is a considerable amount of literature on the subject. Included in this literature are such publications as U.S. Patent No. 4,005,935 for "Method and Apparatus for Providing a Phase Compensated Optical Beam"; "Connection Between Wavefronts of the Reflected and Excited Light in Stimulated Mandel'Shtam-Brillouin Scattering", Zeldovich et al, ZhETF Pis. Red., vol. 15, No. 3, 1972; "Cancellation of Phase Distortion in the Amplifying Medium with a Brillouin Mirror", Nosach et al, ZhETF Pis. Red., vol 16, No. 11, 1972; and "Stimulated Brillouin Scattering in Optical Fibers", E. P. Ippin et al, Applied Physics Letters, vol. 21, No. 11, 1972. For a general understanding of stimulated backscattering, the book "Laser Handbook", vol. 3, pp. 1077—1150, edited by F. T. Arecchi, North Holland Publishing Co., 1972, provided a good introduction to the subject.

In operation, the laser source 21 provides a laser pulse 26 having a predetermined amplitude and predetermined pulsewidth. Each particular laser source 21 has a range of pulsewidths at which it may operate. For instance, a Q-switched YAG laser may have pulsewidths on the order of 10—300 nanoseconds. A $CO_2$ laser may have pulsewidths on the order of 50—300 nanoseconds, while a flashlamp-pumped dye laser may have pulsewidths on the order of .5—2 microsecond. The particular pulsewidth of the laser pulse 26 correlates to a spatial pulsewidth in feet (1 foot = 30.48 cm) and is determined by the approximate conversion, 1 nanosecond in temporal pulsewidth is equal to 1 foot in spatial pulsewidth. The spatial pulsewidth is of importance to the present invention in that it determines the optimum length of the nonlinear means 24. Thus, the laser pulse 26 is applied through the polarizer 22 and hence through the quarter-wave plate 23 to the input end of the nonlinear means 24. It is necessary to keep the energy density of the laser pulse 26 below that of the threshold for initiating spontaneous stimulated Brillouin scattering within the nonlinear means 24. In this first embodiment, the nonlinear means 24 is shown to be a solid tapered glass cylinder of circular cross-section. The pulse 26 travels down the nonlinear means 24 while the tapering increases the energy density of the leading edge of the pulse 26. The stippling 25 is shown to indicate the increase in energy density as the pulse 26 travels down the length of the nonlinear means 24. The pulse 26 will eventually increase in energy density to a point which is above the threshold necessary to initiate stimulated Brillouin scattering in the nonlinear means 24. This is indicated by the line 27 which represents a cross-sectional cut across the nonlinear means 24.

A better understanding of stimulated Brillouin scattering and the remaining events that occur in practicing the present invention will be obtained with reference to FIG. 2. The stimulated Brillouin scattering process involves the interaction between three entities in the presence of a nonlinear medium. Those entities include the applied laser pulse represented in FIG. 2 by pulse 31, a phonon wave 32 which is created during the stimulated Brillouin scattering process, and a reflected pulse 33. Once the energy density of the applied laser pulse 31 has exceeded the threshold requirement, the pulse 31 interacts with ambient optical noise in the nonlinear medium so as to produce a low amplitude phonon wave 32. A portion of the applied pulse 31 is then reflected from the phonon wave 32 by means of the process of electrostriction to form the reflected pulse 33.

The reflected pulse 33 then interacts with the remaining portion of the applied pulse 31 so as to generate a more intense phonon wave, from which is reflected more of the reflected pulse 33. This is shown in FIGS. 2b to 2d, which shows the increase in the amplitude of the phonon wave 32, and proportionate increase in the reflected pulse 33. As more and more phonons are created, and hence a stronger phonon wave is created, the reflectivity thereof is greatly enhanced so as to approach 100% reflectivity in a relatively short period of time. This steadily increasing reflectivity is shown in FIGS. 2b to 2d. Furthermore, the phonon wave 32 is created along with the reflected pulse 33 at the speed of light in the nonlinear medium, which is directly coupled to the ability of this process to narrow the pulsewidth of the reflected pulse 33.

A simple example of this process should be helpful at this time to illustrate the concept of pulse compression. Referring back to FIG. 2a, although FIG. 2a does not show it as such, assume that the phonon wave 32 has a uniform reflectivity per unit distance at the outset. For instance, assume that the initial reflectivity is 2% per foot, and that the length of the initially reflected pulse 33 and phonon wave 32 is 3 feet long. In FIG. 2b, the reflected pulse 33a has interacted with a portion of the incident pulse 31a and generated new phonons so as to increase the amplitude of the phonon wave 32a. Hence, the reflectivity of the phonon wave 32a has increased, and for instance may be now considered 20% per foot of length. Therefore, in the first foot 20% of the incident energy will be reflected; in the second foot, 20% of the remaining energy (i.e., 80%), or 16% will be reflected; and so on, with less and less energy being reflected for the remainder of the phonon wave 32a. The reflected energy becomes part of the reflected pulse 33a, and the leading edge thereof has achieved a greater amplitude than the trailing edge. Thus, the pulsewidth of the reflected pulse 33a has been shortened. In essence, this process amounts to uneven amplification of the reflected pulse 33 with preferential amplification occurring at the leading edge of the reflected pulse 33.

The increased reflectivity of the photon wave 32a at the leading edge thereof will be further strengthened with continued interaction between the applied and reflected pulses 31a, 33a. The continued increase in reflectivity of the phonon wave 32a continues until 80—100% reflectivity is reached as shown in FIG. 2d. At this point, very little, if any, energy reaches the trailing edge of the phonon wave 32d, and hence the reflected pulse 33d is amplified at or near its leading edge. The continued increase in reflectivity of the phonon wave 32 and the corresponding amplification and pulsewidth shortening of the reflected pulse 33 are shown in FIGS. 2c and 2d. Since almost all the reflection occurs at the leading edge of the phonon wave 32, and since both the phonon wavefront and the reflected pulse 33 are moving at the speed of light to the left in FIG. 2, it is clear that the narrowing of the reflected pulse 33 occurs in such a manner as indicated in FIG. 2.

Referring again to FIG. 1, the narrowing of the reflected pulse may be seen to occur in that portion of the nonlinear means 24 from that point at which the threshold energy density has been exceeded, that is plane 27, and the input end of the nonlinear means 24. This, in general, may be considered the interaction region of the nonlinear means 24. As may be seen from FIG. 2, if the incident pulse 31 has a spatial pulsewidth of say 20 feet, the fact that it is moving at the speed of light to the right and the reflected pulse 33 is moving at the speed of light to the left, the requisite interaction region in which to most efficiently amplify and narrow the reflected pulse 33, will be a length which is approximately 1/2 that of the spatial pulsewidth of the incident pulse 31, or about 10 feet.

Both pulsewidth narrowing and power amplification occurs until such time as the incident pulse is depleted or the reflected pulse exits the nonlinear means 24. One important fact of the stimulated Brillouin scattering process is that the polarization state of the reflected pulse 33c behaves as if the pulse was reflected from an ordinary mirror. The reflected pulse hence exits the nonlinear means 24 and passes through the quarter-wave plate 23 and hence to the polarizer 22 of FIG. 1. The polarization of the reflected pulse is perpendicular to the polarization of the incident pulse, and hence is deflected by the polarizer 22 so as to provide an output pulse 28 of the apparatus of FIG. 1. Another important fact is that the reflected pulse is spatially phase conjugated with respect to the incident pulse, the advantages of which are described in portions of the above-cited literature.

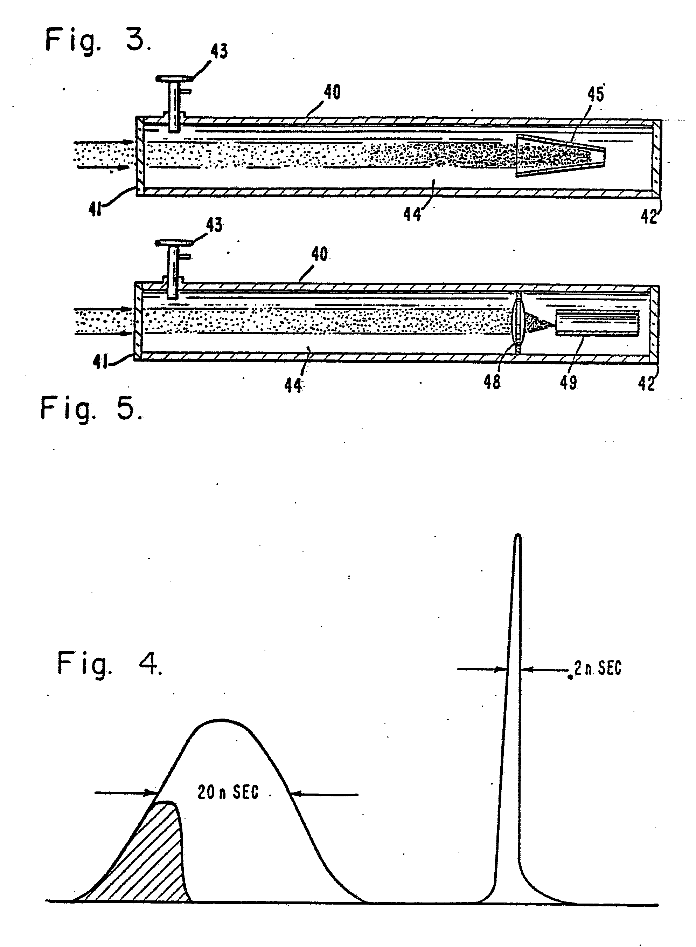

Referring now to FIG. 3, there is shown an embodiment of the nonlinear means 24 which was incorporated in the present invention as it was reduced to practice and tested. The device comprises a metal housing 40 having two optically transmissive windows 41, 42 which are optically transmissive to the applied laser pulse 26 of FIG. 1. The optical windows 41, 42 are configured so as to seal the ends of the metal housing 40. A valve 43 is provided through the housing 40 which allows the housing 40 to be internally pressurized with methane ($CH_4$), or the like, which acts as a gaseous nonlinear medium 44. Disposed within the housing 40 is a hollow tapered glass tube 45 having a decreasing cross-section, which acts as a waveguide to concentrate the applied laser pulse 26 so as to have the required energy density necessary to exceed the stimulated Brillouin scattering threshold.

The device which was tested was approximately 10 feet long in overall length. The interior of the housing 40 was pressurized with methane to a pressure of 150 atmospheres. The laser source 21 of FIG. 1 was a Q-switched YAG laser operating at 1.06 $\mu$ and having a temporal pulsewidth of 20 nanoseconds. The single longitudinal operating mode was used for the laser source 21 in order to increase the efficiency of the stimulated Brillouin scattering process. The laser pulse diameter was approximately 4 mm which also corresponded to the approximate input end of the tapered glass tube 45. The glass tube 45 tapered to approximately 2 mm at the small end and had an overall length of 4 feet. The laser source 21 was operated with a pulse energy of approximately 100 milli-joules. The energy density necessary to initiate spontaneous stimulated Brillouin scattering in this configuration was approximately 100 megawatts per square centimeter.

Referring now to FIG. 4, there is shown test results of the present invention operated using a Q-switched YAG laser source 21 and the embodiment of the nonlinear means as described with reference to FIG. 3. It is seen from FIG. 4, that an input pulse having a 20 nanosecond pulsewidth was applied to the nonlinear means of FIG. 4, and an output pulse of approximately 2 nanoseconds was observed at the output of FIG. 1, namely, given by arrows 28. The hatched portion of the input pulse of FIG. 4 is that portion of the incident pulse 26 which was detected by a detector located adjacent to the optical window 43 of FIG. 3. This represents that portion of the incident laser pulse which was transmitted by the nonlinear means 24 prior to reaching 100% reflectivity.

Referring now to FIG. 5, there is shown a third embodiment of the nonlinear means 24 of the present invention which is similar to the embodiment of FIG. 3; however, a lens 48 which focuses the laser pulse 26 onto the input end of an optical waveguide 49 is provided in place of the tapered glass tube 45 of FIG. 3. The lens 48 acts to focus the incident laser pulse to the required energy density threshold such that stimulated backscattering is initiated in the waveguide 49.

The above-described embodiments have been shown to provide pulse compression for various laser sources utilizing various nonlinear means to accomplish the pulsewidth narrowing. The stimulated Brillouin scattering process may be utilized to narrow pulsewidths of various laser sources to pulsewidths on the order of 1—10 nanoseconds or so. Such pulse compression allows lasers such as $CO_2$, YAG or flashlamp-pumped dye, or the like, to be utilized for applications such as radar ranging and laser fusion which would otherwise not be optimally accomplished by these laser sources.

The present invention, however, is not limited to the use of only stimulated Brillouin scattering but may also employ other stimulated back-scattering processes such as Raman or Rayleigh scattering to accomplish even further pulsewidth narrowing of various laser sources. For example, means of stimulated Raman scattering, pulsewidths on the order of 10 picoseconds and less may be achieved utilizing the apparatus of the present invention.

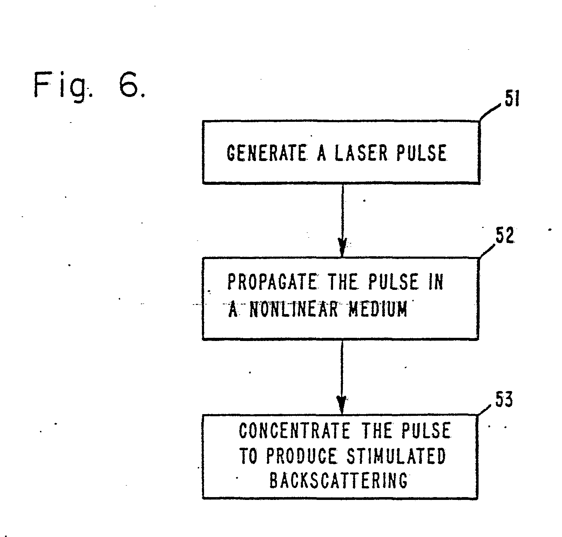

A method of obtaining a narrow laser pulse derived from a relatively wide laser pulse is provided by the present invention and is illustrated with reference to FIG. 6. The method comprises the steps of generating a laser pulse, represented by box 51. This laser pulse is then propagated in a nonlinear medium, represented by box 52. The laser pulse is then concentrated at a predetermined position in the nonlinear medium so as to induce spontaneous stimulated backscattering therein, represented by box 53. The backscattered light interacts with the propagating laser pulse within the nonlinear medium to produce a relatively narrow laser pulse as compared with the pulsewidth of the generated laser pulse.

It is to be understood that the above-described embodiments of the invention are merely illustrative of the many possible specific embodiments which represent applications of the present invention. Numerous and varied other arrangements can readily be devised in accordance with these principles by those skilled in the art without departing from the scope of the invention.

## Claims

1. Apparatus for transforming an applied laser pulse into a laser pulse having a shortened pulsewidth, said apparatus comprising:

a source of a laser pulse; and

nonlinear means which is capable of undergoing stimulated backscattering, for reflecting backscattered light, disposed so as to receive an applied laser pulse from said source, said nonlinear means further comprising means for increasing the energy density of the leading portion of said applied laser pulse at a predetermined location in said nonlinear means above the threshold necessary to initiate stimulated backscattering within said nonlinear means;

whereby backscattered light produced by said stimulated backscattering interacts with the remainder of said applied laser pulse within said nonlinear means in a manner which amplifies and shortens the pulsewidth of said backscattered light.

2. The apparatus of Claim 1 wherein said nonlinear means comprises a tapered waveguide portion to increase the energy density of said applied laser pulse.

3. The apparatus of Claim 1 wherein said nonlinear means comprises a waveguide having decreasing cross-section for increasing the energy density of said applied laser pulse.

4. The apparatus of Claim 1 wherein said nonlinear means comprises a lens for focusing said applied laser pulse and an optical waveguide into which said pulse is focused for initiating said stimulated backscattering.

5. A method of obtaining a narrow laser pulse derived from a relatively wide laser pulse, said method comprising the steps of:

generating a laser pulse;

propagating said laser pulse in a nonlinear medium capable of undergoing stimulated backscattering; and

concentrating said laser pulse so as to increase the energy density of the leading portion of the laser pulse at a predetermined position in said medium above the threshold necessary to induce spontaneous stimulated backscattering therein;

whereby backscattered light interacts with the remainder of said laser pulse within said medium to produce a relatively narrow laser pulse.

6. The method of Claim 5 wherein said nonlinear medium is one capable of undergoing stimulated Brillouin scattering.

## Revendications

1. Appareil pour transformer une impulsion laser appliquée en une impulsion laser ayant une largeur raccourcie, ledit appareil comprenant:

une source d'une impulsion laser; et

des moyens non linéaires qui sont capables de subir une rétrodiffusion stimulée, pour réfléchir la lumière rétrodiffusée, disposés afin de recevoir une impulsion laser appliquée provenant de ladite source, lesdits moyens non linéaires comprenant en outre des moyens destinés à élever la densité d'énergie de la partie avant de ladite impulsion laser appliquée, en un emplacement prédéterminé desdites moyens non linéaires, au-dessus du seuil nécessaire pour déclencher une rétrodiffusion stimulée à l'intérieur desdits moyens non linéaires, de manière que la lumière rétrodiffusée, produite par ladite rétrodiffusion stimulée, interagisse avec la partie restante de ladite impulsion laser appliquée à l'intérieur desdits moyens non linéaires, d'une façon qui amplifie et raccourcit la largeur d'impulsion de ladite lumière rétrodiffusée.

2. Appareil selon la revendication 1, dans lequel lesdits moyens non linéaires comprennent une partie de guide d'onde conique destinée à accroître la densité d'énergie de ladite impulsion laser appliquée.

3. Appareil selon la revendication 1, dans lequel lesdits moyens non linéaires comprennent un guide d'onde ayant une section décroissante pour accroître la densité d'énergie de ladite impulsion laser appliquée.

4. Appareil selon la revendication 1, dans lequel lesdits moyens non linéaires comprennent une lentille destinée à focaliser ladite impulsion laser appliquée et un guide d'onde optique dans lequel ladite impulsion est focalisée pour déclencher ladite rétrodiffusion stimulée.

5. Procédé pour obtenir une impulsion laser étroite dérivée d'une impulsion laser relativement large, ledit procédé comprenant les étapes qui consistent:

à générer une impulsion laser;

à faire propager ladite impulsion laser dans un milieu non linéaire capable de subir une rétrodiffusion stimulée; et

à concentrer ladite impulsion laser afin d'élever la densité d'énergie de la partie avant de l'impulsion laser, en une position prédéterminée dans ledit milieu, au-dessus de seuil nécessaire pour y induire une rétrodiffusion stimulée spontanée,

de manière que la lumière rétrodiffusée interagisse avec la partie restante de ladite impulsion laser à l'intérieur dudit milieu pour produire une impulsion laser relativement étroite.

6. Procédé selon la revendication 5, dans lequel ledit milieu non linéaire est un milieu capable de subir une diffusion stimulée de Brillouin.

## Patentansprüche

1. Vorrichtung zum Transformieren eines ihr zugeführten Laserimpulses in einen Laserimpuls mit verminderter Impulsbreite, gekennzeichnet durch eine Laserimpuls-Quelle und

eine nichtlineare Einrichtung zur Erzeugung einer stimulierten Rückwärtsstreuung, der von der Quelle Laserimpulse zuführbar sind und die eine Einrichtung zum Erhöhen der Energiedichte des vorderen Abschnittes eines zugeführten Laserimpulses an einer vorgegebenen Stelle in der nichtlinearen Einrichtung bis über den Schwellenwert aufweist, bei dessen Überschreiten die stimulierte Rückwärtsstreuung eintritt,

so daß durch diese stimulierte Rückwärtsstreuung erzeugtes, rückwärts gestreutes Licht mit dem Rest des Laserimpulses innerhalb der nichtlinearen Einrichtung in einer Weise in Wechselwirkung tritt, durch welche das rückwärts gestreute Licht verstärkt und dessen Impuls verkürzt wird.

2. Vorrichtung nach Anspruch 1, dadurch gekennzeichnet, daß die nichtlineare Einrichtung einen sich stetig verjüngenden Hohlleiterabschnitt aufweist, um die Energiedichte des zugeführten Laserimpulses zu erhöhen.

3. Vorrichtung nach Anspruch 1, dadurch gekennzeichnet, daß die nichtlineare Einrichtung einen Hohlleiter mit abnehmendem Querschnitt aufweist, um die Energiedichte des zugeführten Laserimpulses zu erhöhen.

4. Vorrichtung nach Anspruch 1, dadurch gekennzeichnet, daß die nichtlineare Einrichtung eine Linse zum Fokussieren des zugeführten Laserimpulses und einen optischen Holleiter aufweist, auf den der Laserimpuls fokussiert wird, um die stimulierte Rückwärtsstreuung zu bewirken.

5. Verfahren zum Erzeugen eines verkürzten Laserimpulses ausgehend von einem relativ breiten Laserimpuls, dadurch gekennzeichnet, daß

ein Laserimpuls erzeugt wird,

der Laserimpuls zur Ausbreitung in einem nichtlinearen Medium veranlaßt wird, das zu stimulierter Rückwärtsstreuung anregbar ist, und

der Laserimpuls konzentriert wird, um die Energiedichte des vorderen Abschnittes des Laserimpulses in einem vorgegebenen Bereich innerhalb des Mediums bis über den Schwellenwert zu erhöhen, bei dem eine spontane, stimulierte Rückwärtsstreuung eintritt,

so daß rückwärts gestreutes Licht mit dem Rest des Laserimpulses innerhalb des Mediums zusammenwirkt und dadurch ein verkürzter Impuls erzeugt wird.

6. Verfahren nach Anspruch 5, dadurch gekennzeichnet, daß ein nichtlineares Medium verwendet wird, des eine stimulierte Brillouin-Streuung zu bewirken vermag.

Fig. 1.

Fig. 2.

a.

b.

c.

d.

Fig. 3.

Fig. 5.

Fig. 4.

20 n SEC

2 n SEC

# Fig. 6.

```
                    ┌─────────────────────────────┐ ⌐51
                    │    GENERATE A LASER PULSE    │
                    └─────────────────────────────┘
                                  │
                                  ▼
                    ┌─────────────────────────────┐ ⌐52
                    │     PROPAGATE THE PULSE IN   │
                    │     A NONLINEAR MEDIUM       │
                    └─────────────────────────────┘
                                  │
                                  ▼
                    ┌─────────────────────────────┐ ⌐53
                    │    CONCENTRATE THE PULSE     │
                    │   TO PRODUCE STIMULATED      │
                    │      BACKSCATTERING          │
                    └─────────────────────────────┘
```